# EUROPEAN PATENT APPLICATION

(11) **EP 4 613 611 A1**
(43) Date of publication of application: **10.09.2025**
(21) Application number: 23884171.2
(22) Date of filing: 05.06.2023
(51) Int. Cl.: B62D 1/06

(54) **STEERING WHEEL, INTELLIGENT DRIVING CONTROL DEVICE, AND VEHICLE**

(30) Priority: 31.10.2022 CN 202222882291 U
(71) Applicant: BYD Company Limited, Shenzhen, Guangdong 518118 (CN)
(72) Inventor: GUO, Ailong, Shenzhen, Guangdong 518118 (CN); YANG, Dongsheng, Shenzhen, Guangdong 518118 (CN); LIU, Ke, Shenzhen, Guangdong 518118 (CN); WANG, Huan, Shenzhen, Guangdong 518118 (CN); ZHANG, Zhijie, Shenzhen, Guangdong 518118 (CN)
(74) Representative: Mathys & Squire
(86) International application number: PCT/CN2023/098192
(87) International publication number: WO 2024/093231

(57) **Abstract**

A vehicle is provided, having a controller and a steering wheel (1). A paddle (2) and an indicator are provided on the steering wheel (1). The indicator includes a paddle indicator (3). The paddle indicator (3) is provided on the paddle (2), and the paddle indicator (3) is configured to indicate a current state of the vehicle in cooperation with the paddle (2).

## Description

This application claims priority to Chinese Patent Application No. 202222882291.4, filed on October 31, 2022 and entitled "STEERING WHEEL, INTELLIGENT DRIVING CONTROL APPARATUS, AND VEHICLE", which is incorporated herein by reference in its entirety.

### TECHNICAL FIELD

This application relates to a steering wheel, an intelligent driving control apparatus, and a vehicle.

### BACKGROUND

In a related technology, intelligent driving functions of a vehicle include driver assistance at L1, partial driving automation at L2, and even conditional driving automation higher than L3. However, the activation switch for each intelligent driving function is excessively complex, and a driver needs to make excessive learning efforts to control various functions. This does not meet a current requirement for simplified human-machine interaction.

### SUMMARY

A technical problem to be resolved in this application is a technical problem that an activation switch for intelligent driving in an existing vehicle is excessively complex, and a steering wheel, an intelligent driving control apparatus, and a vehicle are provided.

To resolve the foregoing technical problem, according to an aspect, an embodiment of this application provides a steering wheel. A paddle and an indicator are provided on the steering wheel. The indicator includes:
a paddle indicator, where the paddle indicator is provided on the paddle, and the paddle indicator is configured to indicate a current state of a vehicle in cooperation with the paddle.

Optionally, the paddle is configured to switch a level, a type, and/or a status of an intelligent driving function; and the paddle indicator is configured to indicate level information, type information, and/or status information of the corresponding intelligent driving function in cooperation with the paddle.

Optionally, the paddle indicator has a plurality of display states.

The paddle indicator is a color light variable indicator, a frequency variable indicator, a brightness variable indicator, or a progress bar indicator.

Optionally, different display states respectively correspond to different intelligent driving functions.

A Level-1 intelligent driving function is enabled when the paddle is flicked once.

A Level-2 intelligent driving function is enabled when the paddle is continuously flicked a plurality of times.

A user-defined driving function/the Level-2 intelligent driving function is enabled when the paddle is touched and held, where the touch and hold is to keep the paddle in a flicked state for 0.5s to 10s.

Optionally, the Level-1 intelligent driving function is an adaptive cruise control function, and the Level-2 intelligent driving function is an all-scene intelligent navigation assistance function or an intelligent cruise control function.

Optionally, the steering wheel includes a wheel hub, a spoke, and a wheel rim, the spoke is connected between the wheel hub and the wheel rim, and the wheel rim is located on an outer circumference of the wheel hub.

At least one paddle is provided, each paddle is mounted on the wheel hub, and the paddle is located on an inner side of the wheel rim, above a plane on which an axis of the spoke is located, or above a plane on which an axis of the wheel hub is located.

Optionally, the paddle indicator is provided on a side surface that is of the paddle and that faces a driver, and/or is provided in a circumferential direction of the paddle.

Optionally, the indicator further includes a wheel rim indicator, the wheel rim indicator is provided on the wheel rim and is located on a side surface that is of the wheel rim and that faces a driver, and the wheel rim indicator is configured to indicate the current state of the vehicle in cooperation with the paddle.

The wheel rim indicator has a plurality of display states, and the wheel rim indicator is capable of being turned on or off synchronously with the paddle indicator.

When the wheel rim indicator is turned on synchronously with the paddle indicator, a display state of the wheel rim indicator is the same as that of the paddle indicator.

The wheel rim indicator is a color light variable indicator, a frequency variable indicator, a brightness variable indicator, or a progress bar indicator, at least one wheel rim indicator is provided, and each wheel rim indicator extends in a circumferential direction of the wheel rim.

Optionally, the indicator further includes a spoke indicator, the spoke indicator is provided on the spoke and is located on a side surface that is of the spoke and that faces a driver, and the spoke indicator is configured to indicate the current state of the vehicle in cooperation with the paddle.

The spoke indicator has a plurality of display states, and the spoke indicator is capable of being turned on or off synchronously with the paddle indicator.

When the spoke indicator is turned on synchronously with the paddle indicator, a display state of the spoke indicator is the same as that of the paddle indicator.

The spoke indicator is a color light variable indicator, a frequency variable indicator, a brightness variable indicator, or a progress bar indicator, and at least one spoke indicator is provided.

In the steering wheel in this embodiment of this application, the corresponding paddle indicator is provided on the paddle, and the driver may flick, based on a requirement of the driver, the paddle to enable a required intelligent driving/driver assistance function. When the paddle is flicked, the paddle indicator may correspondingly emit light, so that the driver can more intuitively understand the current state of the vehicle based on the indicator, and the driver can more intuitively and easily enable the intelligent driving function, to create a more human-centric driving experience. A manner in which an intelligent driving control apparatus with the steering wheel turns on a switch is simple, and the driver does not need to make excessive learning efforts. This simplifies human-machine interaction.

According to another aspect, an embodiment of this application further provides an intelligent driving control apparatus, including a controller and the foregoing steering wheel. The controller is configured to: control, in response to an action of the paddle, a driving object to execute a corresponding intelligent driving mode, and control an indication status of the indicator.

According to still another aspect, an embodiment of this application further provides a vehicle, including the foregoing steering wheel or intelligent driving control apparatus.

### BRIEF DESCRIPTION OF DRAWINGS

FIG. 1 is a diagram of a steering wheel according to Embodiment 1 of this application;
FIG. 2 is a diagram of a steering wheel according to Embodiment 2 of this application;
FIG. 3 is a diagram of a steering wheel at another angle according to Embodiment 2 of this application;
FIG. 4 is a diagram of a steering wheel according to Embodiment 3 of this application;
FIG. 5 is a diagram of a steering wheel according to Embodiment 4 of this application;
FIG. 6 is a diagram of a steering wheel according to Embodiment 5 of this application;
FIG. 7 is a diagram of a steering wheel according to Embodiment 6 of this application;
FIG. 8 is a diagram of a steering wheel according to Embodiment 7 of this application; and
FIG. 9 is a diagram of a steering wheel according to Embodiment 8 of this application.

Reference numerals in the specification are as follows:
1: Steering wheel; 11: Wheel rim; 12: Spoke; 121: First connection arm; 122: Second connection arm; 123: Third connection arm; 13: Wheel hub;
2: Paddle;
3: Paddle indicator;
4: Wheel rim indicator; 41: Light strip; and
5: Spoke indicator.

### DESCRIPTION OF EMBODIMENTS

To make the to-be-resolved technical problem, technical solutions, and beneficial effects of this application clearer, the following further describes this application in detail with reference to the accompanying drawings and embodiments. It should be understood that specific embodiments described herein are merely used to explain this application, but are not intended to limit this application.

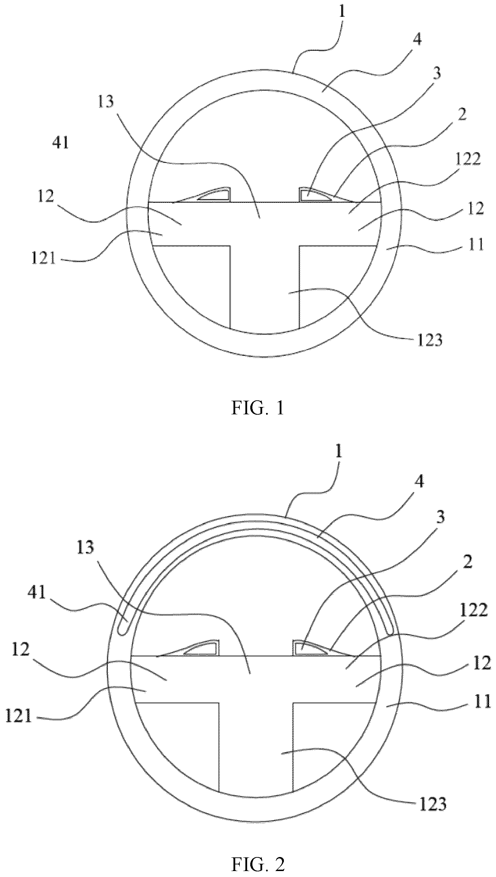

As shown in FIG. 1 to FIG. 9, a steering wheel 1 is provided in embodiments of this application. A paddle 2 and an indicator are provided on the steering wheel 1. The indicator includes a paddle indicator 3. The paddle indicator 3 is provided on the paddle 2, and the paddle indicator 3 is configured to indicate a current state of a vehicle in cooperation with the paddle 2.

In the steering wheel in embodiments of this application, the corresponding paddle indicator 3 is provided on the paddle 2, and a driver may flick, based on a requirement of the driver, the paddle 2 to enable a required intelligent driving/driver assistance function. When the paddle is flicked, the paddle indicator 3 may correspondingly emit light, so that the driver can more intuitively understand the current state of the vehicle based on the indicator, and the driver can more intuitively and easily enable the intelligent driving function, to create a more human-centric driving experience. A manner in which the intelligent driving control apparatus with the steering wheel turns on a switch is simple, and the driver does not need to make excessive learning efforts. This simplifies human-machine interaction.

In an embodiment, the paddle 2 is configured to switch a level, a type, and/or a status of the intelligent driving function. Correspondingly, the paddle indicator 3 is configured to indicate level information, type information, and/or status information of the corresponding intelligent driving function in cooperation with the paddle 2.

Specifically, the level may include a Level 1 and a Level 2. Correspondingly, the intelligent driving function includes a Level-1 intelligent driving function and a Level-2 intelligent driving function.

The type includes an adaptive cruise control (Adaptive Cruise Control, ACC for short) function, an all-scene intelligent navigation assistance (Di Navigation Pilot, DNP for short) function, and an intelligent cruise control (Intelligent Cruise Control, ICC for short) function. The Level-1 intelligent driving function corresponds to ACC, and the Level-2 intelligent driving function is DNP or ICC.

The status includes enabling, switching, and disabling, that is, enabling and disabling of each function and switching between functions.

In an embodiment, the paddle indicator 3 has a plurality of display states, and different display states respectively correspond to different intelligent driving functions.

The paddle indicator 3 is a color light variable indicator, a frequency variable indicator, a brightness variable indicator, or a progress bar indicator.

Specifically, when the paddle indicator 3 is a color light variable indicator, the paddle indicator 3 has different color light, and displays different color light to indicate the current state of the vehicle. When the paddle indicator 3 is a frequency variable indicator, the paddle indicator 3 has different blinking frequencies, and displays different blinking frequencies to indicate the current state of the vehicle. When the paddle indicator 3 is a brightness variable indicator, the paddle indicator 3 has different brightness, and displays different brightness to indicate the current state of the vehicle. When the paddle indicator 3 is a progress bar indicator, the paddle indicator 3 has different progress bar lengths, and displays different progress bar lengths to indicate the current state of the vehicle.

In an embodiment, the Level-1 intelligent driving function is enabled when the paddle 2 is flicked once. The Level-2 intelligent driving function is enabled when the paddle 2 is continuously flicked a plurality of times. The Level-2 intelligent driving function or a user-defined function is enabled when the paddle 2 is touched and held, where the touch and hold is to keep the paddle in a flicked state for 0.5s to 10s.

The Level-1 intelligent driving function is ACC, and the Level-2 intelligent driving function is DNP or ICC.

In an embodiment, when the ACC is enabled, flicking the paddle 2 once may disable the ACC and turn the paddle indicator 3 off.

When the DNP or ICC is enabled, flicking the paddle 2 once may disable the DNP or ICC and tum the paddle indicator 3 off.

When the paddle 2 is touched and held to keep the paddle 2 in the flicked state for 0.5s to 10s, the Level-2 intelligent driving function or the user-defined function is enabled. In this case, a time for touching and holding the paddle may be set based on a requirement. This is not specifically limited herein. In addition, the user-defined function may be one of three functions: the DNP, the ICC, and the ACC, or may be another intelligent driving function, and is specifically independently set by a user. This enriches human-machine interaction, provides a possibility for subsequent implantation or definition of more intelligent driving functions, and expands an application field of the intelligent driving function.

In an embodiment, the paddle indicator 3 is provided on a side surface that is of the paddle 2 and that faces the driver, and/or is provided in a circumferential direction of the paddle 2, to facilitate observation by the driver.

Preferably, a first mounting groove is provided on the paddle 2, and the paddle indicator 3 is mounted in the first mounting groove. The first mounting groove is provided, so that the paddle indicator 3 is mounted on the paddle 2 in a built-in manner.

In an embodiment, as shown in FIG. 1 to FIG. 9, the steering wheel 1 includes a wheel hub 13, a wheel rim 11, and a spoke 12, the spoke 12 is connected between the wheel hub 13 and the wheel rim 11, and the wheel rim 11 is located on an outer circumference of the wheel hub 13, to form a structure of the steering wheel 1.

At least one paddle 2 is provided, each paddle 2 is mounted on the wheel hub 13, and the paddle 2 is located on an inner side of the wheel rim 11, above a plane on which an axis of the spoke 12 is located, or above a plane on which an axis of the wheel hub 13 is located.

In an embodiment, the paddle 2 is built in a central position of the spoke 12, so that the user can flick the paddle up and down/forward and backward. The paddle 2 may be made of a material such as plastic or metal. In addition, the paddle 2 may be in a shape such as a rhombus, a circle, a strip, or an ellipse, and is constructed to meet human engineering and to be easy to operate. When the driver triggers the paddle 2, a corresponding intelligent driving function may be enabled. Different trigger actions of the driver trigger different intelligent driving functions.

In an embodiment, as shown in FIG. 1 to FIG. 9, the paddle 2 is provided on a left side of the wheel hub 13, and/or the paddle 2 is provided on a right side of the wheel hub 13, to facilitate flicking of the paddle 2 by the driver.

In an embodiment, as shown in FIG. 1 to FIG. 9, the spoke 12 includes a first connection arm 121, a second connection arm 122, and a third connection arm 123. Each of the first connection arm 121, the second connection arm 122, and the third connection arm 123 are connected between the wheel rim 11 and the wheel hub 13, and the first connection arm 121, the second connection arm 122, and the third connection arm 123 are provided in a circumferential direction of the wheel hub 13.

Specifically, the first connection arm 121 and the second connection arm 122 may be located on a same straight line, and the third connection arm 123 is perpendicular to the first connection arm 121.

When the steering wheel 1 is in a neutral state, the first connection arm 121 and the second connection arm 122 are located on a same horizontal straight line, the third connection arm 123 is located below the first connection arm 121 in a height direction of the vehicle, and the third connection arm 123 is placed vertically, to form the spoke 12.

Detailed descriptions are provided below by using an example in which the paddle indicator 3 is a color light variable indicator.

### Embodiment 1

As shown in FIG. 1, in Embodiment 1, two paddles 2 are provided, and one paddle indicator 3 is provided on each paddle 2.

When the steering wheel is in the neutral state, the two paddles 2 are respectively located above the first connection arm 121 and the second connection arm 122 in the height direction of the vehicle, and the two paddles 2 are symmetric about the third connection arm 123 in a width direction of the vehicle.

In Embodiment 1, the paddle indicator 3 has at least a first color light and a second color light of different colors.

When the paddle 2 is flicked once, the ACC is enabled, and when the ACC is enabled, the paddle indicator 3 is turned on and emits the first color light.

When the paddle 2 is continuously flicked a plurality of times, the intelligent navigation pilot DNP or the intelligent navigation system ICC function is enabled, and when the intelligent navigation pilot DNP or the ICC is enabled, the paddle indicator 3 is turned on and emits the second color light.

Specifically, when the paddle 2 is touched and held, the DNP, the ICC, or the user-defined function is enabled, and when the DNP or the ICC is enabled, the paddle indicator 3 is turned on and emits the second color light. In addition, when the user-defined function is enabled, the paddle indicator 3 is turned on and emits a third color light.

Based on the color light emitted by the paddle indicator 3, the driver can more intuitively understand the current state of the vehicle, and the driver can more intuitively and easily enable the intelligent driving function, to create a more human-centric driving experience. A manner in which the intelligent driving control apparatus turns on a switch is simple, and the driver does not need to make excessive learning efforts. This simplifies human-machine interaction.

In Embodiment 1, colors of all indicators (including the paddle indicator 3, and the paddle indicator 3 and the wheel rim indicator 4 in the following embodiments) provided on the steering wheel 1 include white, red, blue, and cyan, and all the indicators on the steering wheel 1 are uniformly displayed and are not independently displayed. Preferably, the first color light is white light, the second color light is cyan light, and the third color light is light of a user-defined color.

### Embodiment 2

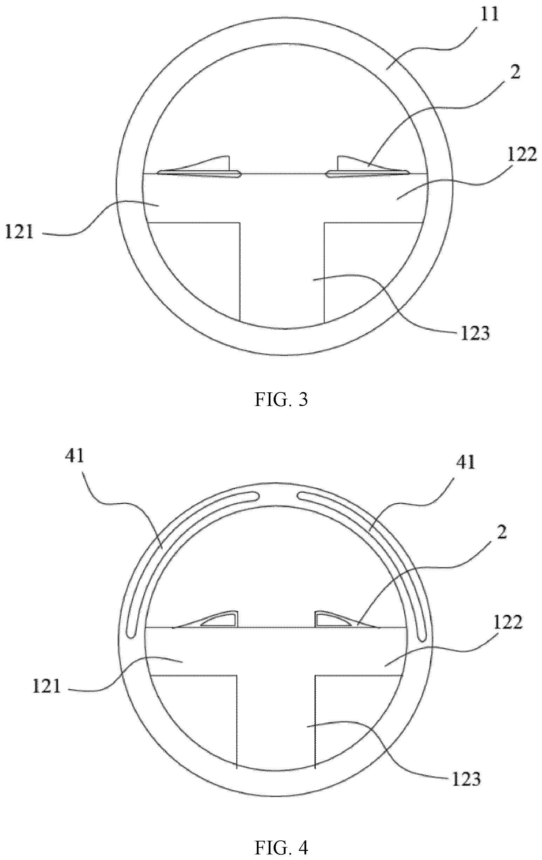

As shown in FIG. 2 and FIG. 3, in Embodiment 2, a quantity and disposing positions of paddles 2 are consistent with those in Embodiment 1. Different from Embodiment 1, the indicator further includes a wheel rim indicator 4, the wheel rim indicator 4 is provided on the wheel rim 11 and is located on a side surface that is of the wheel rim 11 and that faces the driver, and the wheel rim indicator 4 is configured to indicate the current state of the vehicle in cooperation with the paddle 2.

The wheel rim indicator 4 has a plurality of display states, and the wheel rim indicator 4 may be turned on or off synchronously with the paddle indicator 3.

When the wheel rim indicator 4 is turned on synchronously with the paddle indicator 3, a display state of the wheel rim indicator is the same as that of the paddle indicator 3.

Specifically, the wheel rim indicator 4 is a color light variable indicator, and the wheel rim indicator 4 has at least the first color light and the second color light. When the wheel rim indicator 4 is turned on synchronously with the paddle indicator 3, a light color of the wheel rim indicator 4 is the same as that of the paddle indicator 3.

In another embodiment, the wheel rim indicator may alternatively be a frequency variable indicator, a brightness variable indicator, or a progress bar indicator.

As shown in FIG. 2, in Embodiment 2, one wheel rim indicator 4 is provided, and the wheel rim indicator 4 extends in a circumferential direction of the wheel rim. In addition, the wheel rim indicator 4 is located on an upper edge of the wheel rim 11 in the height direction of the vehicle, that is, a side that is of the first connection arm 121 and that faces away from the third connection arm 123, to form a corresponding steering wheel structure.

In Embodiment 2, a second mounting groove is formed on the wheel rim 11, and the wheel rim indicator 4 is mounted in the second mounting groove. The second mounting groove is provided, so that the wheel rim indicator 4 is mounted on the wheel rim 11 in a built-in manner.

In Embodiment 2, as shown in FIG. 2, the wheel rim indicator 4 includes a light strip 41, and the light strip 41 extends in a circumferential direction of the wheel rim 11. The state is more obviously indicated by using the light strip 41.

### Embodiment 3

As shown in FIG. 4, in Embodiment 3, a quantity and disposing positions of paddles 2 are consistent with those in Embodiment 2. Different from Embodiment 2, in Embodiment 3, two light strips 41 are provided.

When the steering wheel is in the neutral state, both the light strips 41 are located on an upper edge of the wheel rim 11 in the height direction of the vehicle and are symmetric about the third connection arm 123. Specifically, one light strip 41 is located on a side that is of the first connection arm 121 and that faces away from the third connection arm 123, and the other light strip 41 is located on a side that is of the second connection arm 122 and that faces away from the third connection arm 123, to form a corresponding steering wheel.

### Embodiment 4

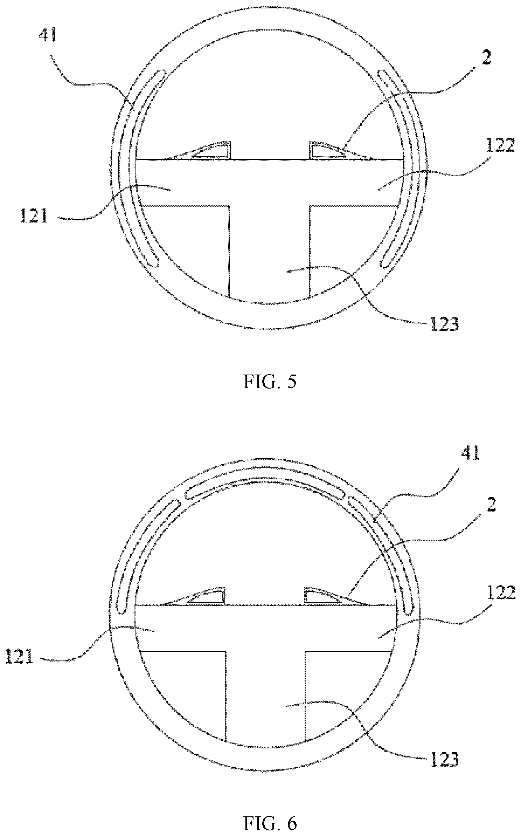

As shown in FIG. 5, in Embodiment 4, a quantity and disposing positions of paddles 2 are consistent with those in Embodiment 2. Different from Embodiment 2, in Embodiment 4, two light strips 41 are provided.

When the steering wheel is in the neutral state, the two light strips 41 are respectively located on a left edge and a right edge of the wheel rim 11 in a width direction of the vehicle. That is, one light strip 41 is located on a side that is of the first connection arm 121 and that faces away from the second connection arm 122, the other light strip 41 is located on a side that is of the second connection arm 122 and that faces away from the first connection arm 121, and the two light strips 41 are symmetric about the third connection arm 123, to form a corresponding steering wheel.

### Embodiment 5

As shown in FIG. 6, in Embodiment 5, a quantity and disposing positions of paddles 2 are consistent with those in Embodiment 2. Different from Embodiment 2, in Embodiment 5, three light strips 41 are provided.

When the steering wheel is in the neutral state, all the three light strips 41 are located on an upper edge of the wheel rim 11 in the height direction of the vehicle, that is, a side that is of the first connection arm 121 and that faces away from the third connection arm 123, to form a corresponding steering wheel structure.

In an embodiment not shown in the figure, when three light strips are provided, and the steering wheel is in the neutral state, all the three light strips are located on a lower edge of the wheel rim in the height direction of the vehicle, that is, a side that is of the first connection arm and that faces the third connection arm, to form a corresponding intelligent driving control apparatus.

In another embodiment not shown in the figure, when three light strips are provided, and the steering wheel may also be in the neutral state, the three light strips are respectively located on a left edge, a right edge, and a lower edge (or an upper edge) of the wheel rim.

### Embodiment 6

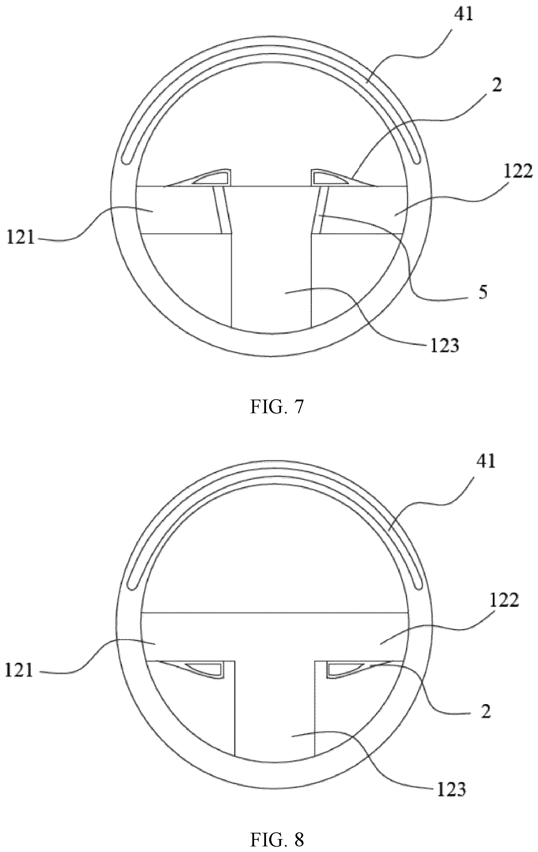

As shown in FIG. 7, in Embodiment 6, a quantity and disposing positions of paddles 2 are consistent with those in Embodiment 2, and a quantity and disposing positions of light strips 41 are consistent with those in Embodiment 2. Different from Embodiment 2, in Embodiment 6, the indicator further includes a spoke indicator 5, the spoke indicator 5 is provided on the spoke 12 and is located on a side surface that is of the spoke 12 and that faces the driver, and the spoke indicator 5 is configured to indicate the current state of the vehicle in cooperation with the paddle 2.

The spoke indicator 5 has a plurality of display states, and the spoke indicator 5 may be turned on or off synchronously with the paddle indicator 3.

When the spoke indicator 5 is turned on synchronously with the paddle indicator 3, a display state of the spoke indicator 5 is the same as that of the paddle indicator 3.

Specifically, the spoke indicator 5 is a color light variable indicator, and the spoke indicator 5 has at least the first color light and the second color light. When the spoke indicator 5 is turned on synchronously with the paddle indicator 3, a light color of the spoke indicator 5 is the same as that of the paddle indicator 3.

In another embodiment, the wheel rim indicator may alternatively be a frequency variable indicator, a brightness variable indicator, or a progress bar indicator.

As shown in FIG. 7, in Embodiment 6, two spoke indicators 5 are provided, the two spoke indicators 5 are respectively provided on the first connection arm 121 and the second connection arm 122, and the two spoke indicators 5 are symmetric about the axis of the wheel hub 13.

In Embodiment 6, a third mounting groove is formed on the spoke 12, and the spoke indicator 5 is mounted in the third mounting groove. The third mounting groove is provided, so that the spoke indicator 5 is mounted on the spoke 12 in a built-in manner.

### Embodiment 7

As shown in FIG. 8, in Embodiment 7, a quantity of paddles 2 is consistent with that in Embodiment 2, and a quantity and disposing positions of light strips 41 are consistent with those in Embodiment 2. Different from Embodiment 2, in Embodiment 7, when the steering wheel is in the neutral state, the two paddles 2 are respectively located below the first connection arm 121 and the second connection arm 122 in the height direction of the vehicle, and the two paddles 2 are symmetric about the third connection arm 123 in a width direction of the vehicle, to form a corresponding steering wheel.

### Embodiment 8

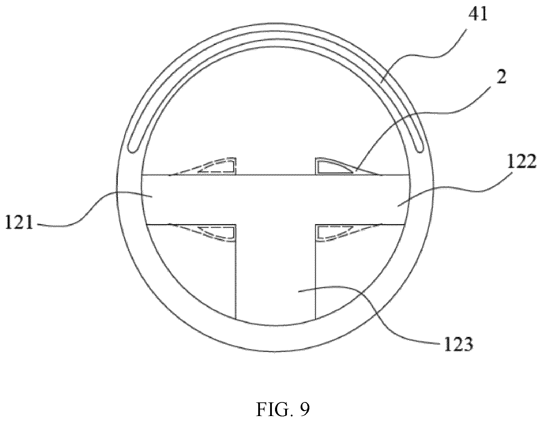

As shown in FIG. 9, in Embodiment 8, a quantity and disposing positions of light strips 41 are consistent with those in Embodiment 2. Different from Embodiment 2, in Embodiment 8, one paddle 2 is provided.

As shown in a solid-line position in FIG. 9, when the steering wheel 1 is in the neutral state, the paddle 2 is located above the second connection arm 122 in the height direction of the vehicle, to form a corresponding steering wheel structure.

In another embodiment, as shown in a dashed-line position in FIG. 9, the single paddle 2 may alternatively be located below the first connection arm 121 in the height direction of the vehicle, or the paddle 2 is located above the first connection arm 121 in the height direction of the vehicle, or the paddle 2 is located below the second connection arm 122 in the height direction of the vehicle.

An intelligent driving control apparatus provided in an embodiment of this application includes a controller and the steering wheel 1 provided in the foregoing embodiments.

A vehicle provided in an embodiment of this application includes the intelligent driving control apparatus provided in the foregoing embodiment or the steering wheel 1 provided in the foregoing embodiments.

It should be noted that a human machine interface (Human Machine Interface, HMI for short) of the intelligent driving control apparatus needs to provide an interface between an autonomous vehicle control system and a driver. The HMI needs to be electrically coupled to an electronic controller, receive an input from a driver end, receive information from the electronic controller, and provide audio feedback, visual feedback, tactile feedback, or other combinational feedback to the driver based on the received information. The HMI further needs to provide a suitable input mechanism (for example, a steering wheel hard switch, a PAD soft switch, or an in-vehicle voice assistant) for providing information from the driver end to enable the electronic controller to control an autonomous vehicle.

During driving, after the driver drives the vehicle onto a road on which an ACC condition is allowed, if an ACC function is ready, an ACC icon on a dashboard is gray, and when the paddle 2 is flicked once, the ACC function is activated, and all indicators on the steering wheel are white and are always on. If the ACC function is not ready, when the paddle 2 is flicked once, the vehicle gives an indication that the ACC function cannot be activated. When the ACC function is activated, if the paddle 2 is flicked once or a brake is stepped on, the ACC function is exited, and the indicator is not white or always on. After the ACC is exited, if the paddle 2 is flicked once again, the vehicle cruises at a current speed. If a RES button is pressed after the ACC is exited, a last memorized speed is resumed.

If the vehicle enters a road that meets a DNP condition, DNP is ready. In this case, an intelligent navigation icon on the dashboard is displayed in gray. When the paddle 2 on any side is continuously flicked twice (based on a quantity of times on a single side, when the paddle 2 is flicked once to the left and once to the right, it is considered that the ACC is activated and then the ACC is exited), the DNP is activated, and all the indicators on the steering wheel are cyan, blink three times at 2 Hz, and then are always on. Then, when the paddle 2 is flicked once again or the brake is stepped on, the DNP function is exited.

If the DNP function is not ready but the ICC function is ready, when the paddle 2 is continuously flicked twice, the ICC is activated, and all the indicators on the steering wheel are cyan, blink three times at 2 Hz, and then are always on. Then, when the paddle 2 is flicked once again or the brake is stepped on, the ICC function is exited.

If neither the DNP nor the ICC function is ready, when the paddle 2 is continuously flicked twice, an indication that the intelligent navigation cannot be activated is given.

In the foregoing function display, display of all the indicators on the steering wheel is independent of that of original status flags on the dashboard, and there is no mutual impact.

After the paddle 2 is flicked to enter the ACC/ICC/DNP function, display of the status flags on the dashboard is the same as display in an original manner in which a button is pressed to enter the ACC/ICC/DNP. Continuously flicking the paddle a plurality of times is equivalently considered as flicking the paddle twice. Simultaneously flicking left and right paddles is considered as separately flicking the left paddle or the right paddle. In this case, a quantity of flicking times is consistent with flicking logic of a single paddle 2.

The foregoing descriptions are merely example embodiments of this application, and are not used to limit this application. Any modification, equivalent replacement, improvement, and the like made in the spirit and principle of this application shall fall within the protection scope of this application.

## Claims

1. A steering wheel (1), wherein a paddle (2) and an indicator are provided on the steering wheel (1), and the indicator comprises:
a paddle indicator (3), wherein the paddle indicator (3) is provided on the paddle (2), and the paddle indicator (3) is configured to indicate a current state of a vehicle in cooperation with the paddle (2).

2. The steering wheel (1) according to claim 1, wherein the paddle (2) is configured to switch a level, a type, and/or a status of an intelligent driving function; and the paddle indicator (3) is configured to indicate level information, type information, and/or status information of the corresponding intelligent driving function in cooperation with the paddle (2).

3. The steering wheel (1) according to claim 1 or 2, wherein the paddle indicator (3) has a plurality of display states; and
the paddle indicator (3) is a color light variable indicator, a frequency variable indicator, a brightness variable indicator, or a progress bar indicator.

4. The steering wheel (1) according to claim 3, wherein different display states respectively correspond to different intelligent driving functions;
a Level-1 intelligent driving function is enabled when the paddle (2) is flicked once;
a Level-2 intelligent driving function is enabled when the paddle (2) is continuously flicked a plurality of times; and
a user-defined driving function/the Level-2 intelligent driving function is enabled when the paddle (2) is touched and held, wherein the touch and hold is to keep the paddle (2) in a flicked state for 0.5s to 10s.

5. The steering wheel (1) according to claim 4, wherein the Level-1 intelligent driving function is an adaptive cruise control function, and the Level-2 intelligent driving function is an all-scene intelligent navigation assistance function or an intelligent cruise control function.

6. The steering wheel (1) according to any one of claims 1 to 5, wherein the steering wheel (1) comprises a wheel hub (13), a spoke (12), and a wheel rim (11), the spoke (12) is connected between the wheel hub (13) and the wheel rim (11), and the wheel rim (11) is located on an outer circumference of the wheel hub (13); and
at least one paddle (2) is provided, each paddle (2) is mounted on the wheel hub (13), and the paddle (2) is located on an inner side of the wheel rim (11), above a plane on which an axis of the spoke (12) is located, or above a plane on which an axis of the wheel hub (13) is located.

7. The steering wheel (1) according to any one of claims 1 to 6, wherein the paddle indicator (3) is provided on a side surface that is of the paddle (2) and that faces a driver, and/or is provided in a circumferential direction of the paddle (2).

8. The steering wheel (1) according to claim 6, wherein the indicator further comprises a wheel rim indicator (4), the wheel rim indicator (4) is provided on the wheel rim (11) and is located on a side surface that is of the wheel rim (11) and that faces a driver, and the wheel rim indicator (4) is configured to indicate the current state of the vehicle in cooperation with the paddle (2);
the wheel rim indicator (4) has a plurality of display states, and the wheel rim indicator (4) is capable of being turned on or off synchronously with the paddle indicator (3);
when the wheel rim indicator (4) is turned on synchronously with the paddle indicator (3), a display state of the wheel rim indicator (4) is the same as that of the paddle indicator (3); and
the wheel rim indicator (4) is a color light variable indicator, a frequency variable indicator, a brightness variable indicator, or a progress bar indicator, at least one wheel rim indicator (4) is provided, and each wheel rim indicator (4) extends in a circumferential direction of the wheel rim (11).

9. The steering wheel (1) according to claim 6, wherein the indicator further comprises a spoke indicator (5), the spoke indicator (5) is provided on the spoke (12) and is located on a side surface that is of the spoke (12) and that faces a driver, and the spoke indicator (5) is configured to indicate the current state of the vehicle in cooperation with the paddle (2);
the spoke indicator (5) has a plurality of display states, and the spoke indicator (5) is capable of being turned on or off synchronously with the paddle indicator (3);
when the spoke indicator (5) is turned on synchronously with the paddle indicator (3), a display state of the spoke indicator (5) is the same as that of the paddle indicator (3); and
the spoke indicator (5) is a color light variable indicator, a frequency variable indicator, a brightness variable indicator, or a progress bar indicator, and at least one spoke indicator (5) is provided.

10. An intelligent driving control apparatus, comprising a controller and the steering wheel (1) according to any one of claims 1 to 9, wherein the controller is configured to: control, in response to an action of the paddle (2), a driving object to execute a corresponding intelligent driving mode, and control an indication status of the indicator.

11. A vehicle, comprising the steering wheel (1) according to any one of claims 1 to 9 or the intelligent driving control apparatus according to claim 10.
